Europäisches Patentamt

European Patent Office

Office européen des brevets

(19)

(11) Veröffentlichungsnummer: **0 279 025**
**A1**

(12) **EUROPÄISCHE PATENTANMELDUNG**

(21) Anmeldenummer: **87114819.3**

(22) Anmeldetag: **10.10.87**

(51) Int. Cl.⁴: **H04M 15/28 , H04M 15/36**

(30) Priorität: **12.01.87 CH 73/87**

(43) Veröffentlichungstag der Anmeldung:
**24.08.88 Patentblatt 88/34**

(84) Benannte Vertragsstaaten:
**CH DE ES FR GB IT LI**

(71) Anmelder: **SODECO SA**

**CH-1211 Genève 16(CH)**

(72) Erfinder: **Philippe, Junod**
**Grand-Rue 19**
**CH-1162 St. Prex(CH)**

(74) Vertreter: **Nünlist, Hans et al**
**LGZ LANDIS & GYR ZUG AG**
**Konzern-Patentabteilung**
**CH-6301 Zug(CH)**

(54) **Empfänger für Taximpulse.**

(57) Der Empfänger (1) für Taxsignale mit einer hohen Trägerfrequenz, wie er in Taxzählern und in Telephonstationen eingebaut wird, enthält einen Tiefpassfilter (2) zum Abschneiden von Hochfrequenzanteilen oberhalb der Trägerfrequenz aus einem Signal am Eingang (8) und einen Generator (4) zum Erzeugen eines Generatorsignals. Eine Multiplikatorschaltung (3) bildet ein Produkt ($U_{EB}$) aus dem gefilterten Signal und dem Generatorsignal. Ein nachgeschalteter Bandpassfilter (5), ein Hüllkurven-Detektor (6) und ein Schwellwertschalter (7) erzeugen an einem Ausgang (13) für die Weiterverarbeitung geeignete Taximpulse. Der Tiefpassfilter (2) und der Bandpassfilter (5) sind z. B. aktive RC-Filter vierter Ordnung. Der Empfänger (1) lässt sich im Bereich von 3 kHz bis 16 kHz abstimmen.

Fig.1

## Empfänger für Taximpulse

Die Erfindung bezieht sich auf einen Empfänger für Taximpulse mit einer hohen Trägerfrequenz gemäss dem Oberbegriff des Anspruchs 1.

Für die Erfassung von Gesprächsgebühren sind Systeme bekannt, bei denen während einer gebührenpflichtigen Verbindung sogenannte Taximpulse von einer Telephonzentrale zu einer anrufenden Telephonstation gesendet werden. Falls die Telephonstation mit einem Zusatzgerät zum Empfang dieser Taximpulse ausgerüstet ist, lässt sich entweder die Gebühr durch Aufsummieren der empfangenen Taximpulse auf einer Anzeige des Taxempfängers direkt ablesen oder von einem vorhandenen Kredit jeweils eine dem Taximpuls entsprechende Gebühreneinheit subtrahieren. Damit eine das Gespräch wenig störende Uebertragung der Taximpulse erreicht wird, moduliert man die Taximpulse auf eine Trägerfrequenz etwa im Bereich von 12 kHz bis 16 kHz auf. Ein derartiges System ist aus der Druckschrift "Das 12 kHz-Gebührenmeldersystem" der schweizerischen PTT-Betriebe (1973) bekannt.

Die bekannten Taxempfänger enthalten in ihrem Aufbau aktive oder passive Elemente, um die Trägerfrequenz und damit die Taximpulse aus dem Amtsleitungssignal mittels eines schmalbandigen, auf die Trägerfrequenz abgestimmten Bandpassfilters herauszufiltern. Die Anforderungen an die Taxempfänger und insbesondere an die Filterkreise bezüglich deren Stabilität während des Betriebes sind sehr hoch. Zum Ausgleich der herstellungsbedingten Streuungen müssen daher die Bauelemente der Filterkreise abgleichbar sein. Um den strengen Anforderungen für den Abgleich und für die Stabilität während des Betriebes zu genügen, müssen elektrisch wie mechanisch hochpräzise Bauelemente verwendet werden.

Die Trägerfrequenzen sind normiert. Bekannte Frequenzen sind 12 kHz und 16 kHz. Diese Trägerfrequenzen können aber in pupinisierten Amtsleitungen nicht übertragen werden, weil Signale über etwa 4 kHz stark gedampft werden. Eine Trägerfrequenz im Bereich zwischen 3 kHz und 4 kHz wird daher auch in Betracht gezogen, um auch in diesen Amtsleitungen die Gesprächsdauer mit Taximpulsen zu erfassen.

Die in Ausführungen gemäss Stand der Technik von Taxempfängern benutzten Schaltungen sind für jede Trägerfrequenz spezifisch ausgelegt, damit die Empfänger den strengen Anforderungen genügen.

Der Erfindung liegt die Aufgabe zugrunde, einen Empfänger zu schaffen, der für alle Trägerfrequenzen gleich aufgebaut ist, der im Bereich der Trägerfrequenz von 3 kHz bis 16 kHz abstimmbar ist, der weniger Abgleicharbeit und weniger präzise, dafür billigere Komponenten für die Herstellung erfordert und dennoch die von den Postbetrieben gestellten strengen Anforderungen erfüllt.

Die genannte Aufgabe wird erfindungsgemäss durch die im Kennzeichen des Anspruchs 1 angegebenen Merkmale gelöst.

Ausführungsbeispiele der Erfindung sind in den Zeichnungen dargestellt und werden im folgenden näher beschrieben. Es zeigen

Figur 1: ein Blockschema eines Taxempfängers,

Figur 2: Diagramme von Frequenzspektren im Taxempfänger mit einer sinusförmigen Spannung einer Referenzfrequenz,

Figur 3: ein Blockschema eines anderen Taxempfängers und

Figur 4: Diagramme von Frequenzspektren im Taxempfänger mit einer symmetrischen Rechteckfunktion einer Abtastfrequenz.

In allen Figuren werden für gleiche Begriffe die gleiche Numerierung und die gleiche Benennung verwendet.

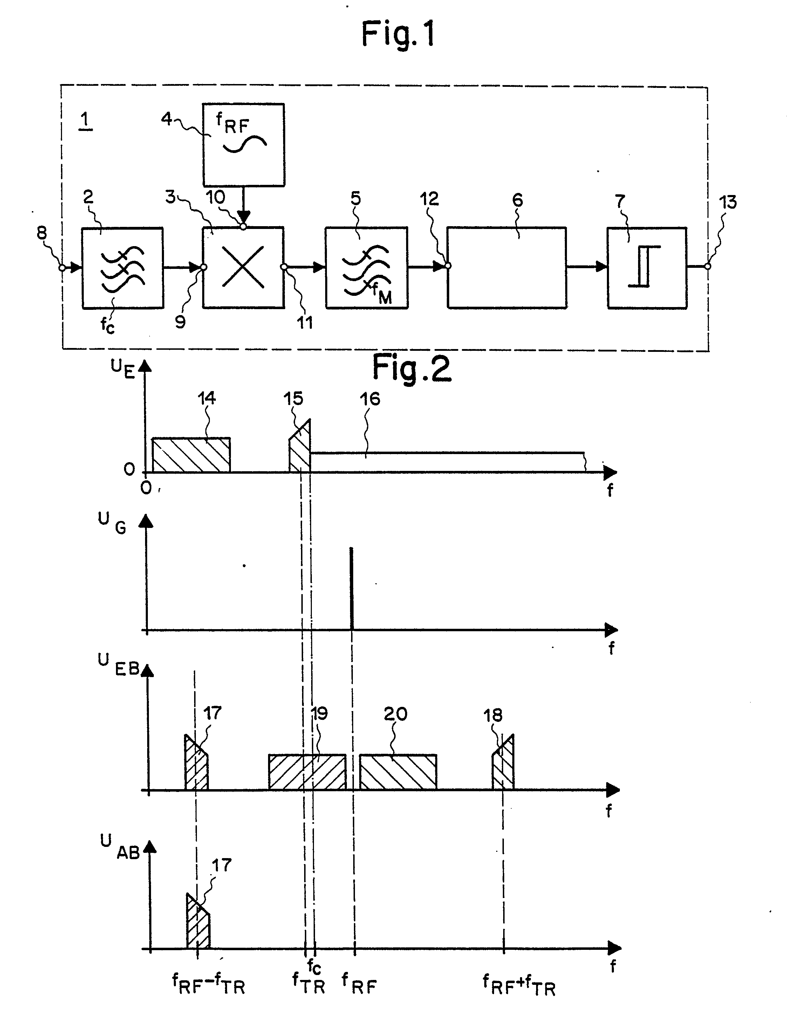

Eine Ausführung eines Taxempfängers 1 besteht gemäss der Figur 1 aus einem Tiefpassfilter 2, einer Multiplikatorschaltung 3, einem Generator 4, der eine Referenzfrequenz $f_{RF}$ erzeugt, einem Bandpassfilter 5, einem Hüllkurven-Detektor 6 und einem Schwellwertschalter 7.

Ein Eingang 8 des Taxempfängers 1 ist, hier nicht dargestellt, gleichstromfrei mittels einer der für den Anschluss von Empfängern 1 impedanzmässigen Anpassung an der dafür üblichen Stelle einer Amtsleitung angeschlossen. Ein erster Eingang 9 der Multiplikatorschaltung 3 ist mittels des Tiefpassfilters 2 an den Eingang 8 des Taxempfängers 1 angeschlossen, ein zweiter Eingang 10 der Multiplikatorschaltung 3 mit einem Signalausgang des Generators 4. Ein Ausgang 11 der Multiplikatorschaltung 3 ist mit einem Eingang des Bandpassfilters 5 verbunden. Ein Ausgang des Filters 5 steht mit einem Eingang 12 des Hüllkurven-Detektors 6 in Verbindung. Ein Ausgang des Detektors 6 ist mit einem Eingang des Schwellwertschalters 7 verbunden. Von einem Ausgang 13 des Schalters 7 und damit des Empfängers 1 führt eine Leitung zu der hier nicht gezeigten Einrichtung für die Weiterverarbeitung der Taximpulse, z. B. einer Zähleinrichtung.

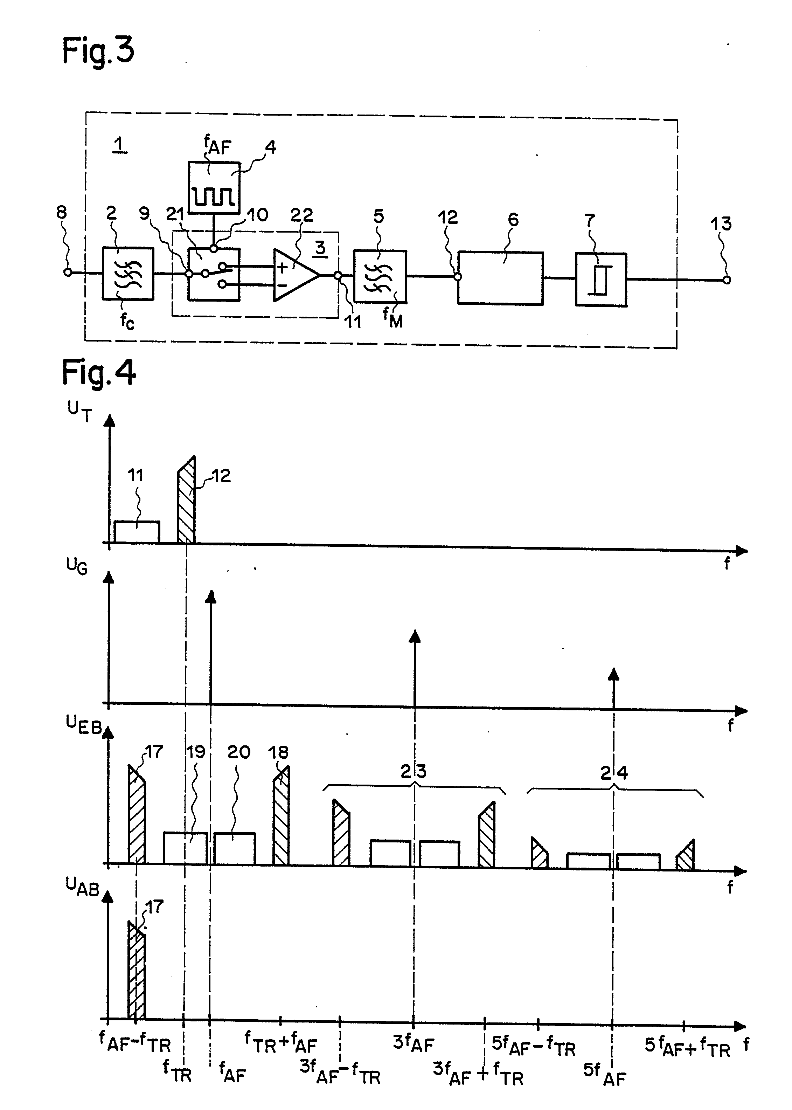

Vier Frequenzspektren von Signalen an verschiedenen Punkten im Empfänger 1 sind in der Figur 2 gezeigt. Ein ankommendes Eingangssignal $U_E$ am Eingang 8 (Figur 1) setzt sich aus drei Frequenzbereichen zusammen. Das Gespräch ist in einem niederfrequenten Bereich, einem Gesprächsband 14 (Figur 2), enthalten. Die einer Trägerfrequenz $f_{TR}$ überlagerten Taximpulse bilden im Spektrum ein symmetrisch zur Trägerfrequenz $f_{TR}$ angeordnetes Trägerfrequenzband 15. Hochfrequenzenanteile 16 mit Frequenzen, die höher als das Band 15 liegen und auf der Amtsleitung empfangen werden, haben für den Empfang der Taximpulse keine Bedeutung.

Die Eckfrequenz $f_C$ des Filters 2 (Figur 1) ist derart gewählt, dass das Filter 2 vom ankommenden Signal $U_E$(Figur 2) die Hochfrequenzanteile 16 abschneidet. Das Ausgangssignal des Filters 2 (Figur 1) am Eingang 9 wird in der Multiplikatorschaltung 3 mit einem im Generator 4 erzeugten, der Multiplikatorschaltung 3 über den Eingang 10 zugeführten sinusförmigen Generatorsignal $U_G$ - (Figur 2) mit einer Referenzfrequenz $f_{RF}$ multipliziert. Das Frequenzspektrum von $U_G$ weist daher nur die Frequenz $f_{RF}$ auf, die einige kHz höher als die Trägerfrequenz $f_{TR}$ eingestellt ist.

Wenn $\alpha$ die Kreisfrequenz zu $f_{RF}$ bezeichnet, kann das sinusförmige Generatorsignal $U_G$ mit der Funktion

$$U_G = A * \sin \alpha \qquad [1]$$

beschrieben werden, wobei A die Amplitude ist.

Das Eingangssignal $U_E$ setzt sich aus einer Suame von Sinusfunktionen $U_{Ek}$ mit Frequenzen $\beta_{Ek} = 2\pi f_{Ek}$ und Amplituden $B_{Ek}$ zusammen, also

$$U_{Ek} = B_{Ek} * \sin \beta_{Ek} \qquad [2]$$

Am Ausgang 11 (Figur 1) der Multiplikatorschaltung 3 erscheint als Produkt der Signale $U_G$ und $U_E$ (Figur 2) ein Produktsignal $U_{EB}$. Da $U_E$ aus vielen Frequenzen zusammengesetzt ist, stellt sich auch das Produkt als eine Summe von Teilprodukten $U_{EBk}$ dar. In der bekannten Weise ergibt sich aus den Gleichungen [1] und [2] das Teilprodukt $U_{EBk}$ für jedes k,

$$U_{EBk} = \tfrac{1}{2} * A * B_{Ek} * \{\cos(\alpha-\beta)-\cos(\alpha + \beta)\}. \qquad [3]$$

Im Frequenzspektrum belegt daher das Signal $U_{EB}$ (Figur 2) zwei zu der Referenzfrequenz $f_{RF}$ spiegelsymmetrische Bereiche. Durch die Multiplikationsoperation wird das Band 15 in einen Bereich 17 zentriert um die Differenzfrequenz $f_{RF}-f_{TR}$ und in einen Bereich 18 zentriert um die Summenfrequenz $f_{RF} + f_{TR}$ transformiert. In gleicher Weise gruppieren sich beide aus dem niederfrequenten Gesprächsband 14 entstandenen Bänder 19 und 20 um die Referenzfrequenz $f_{RF}$.

Aus dem Produktsignal $U_{EB}$ am Ausgang 11 (Figur 1) der Multiplikatorschaltung 3 wird mittels des Bandpassfilters 5 der Bereich 17 (Figur 2) herausgefiltert und als ein Ausgangssignal $U_{AB}$ über einen Eingang 12 (Figur 1) dem Hüllkurven-Detektor 6 zugeführt. Die Mittenfrequenz $f_M$ des Filters 5 wird vorzugsweise gleich der Differenzfrequenz $f_{RF}-f_{TR}$ gewählt.

Der Hüllkurven-Detektor 6 gewinnt, z. B. durch Gleichrichten, die ursprünglichen Taximpulse zurück. Nach Verstärkung wird eine saubere Signalform mittels des Schwellwertschalters 7 erzeugt und die Taximpulse am Ausgang 13 für die Weiterverarbeitung, z. B. in einer Zählvorrichtung, bereitgestellt.

Eine Ausführung des Empfängers 1 benutzt für den Empfang von Taximpulsen mit einer Trägerfrequenz $f_{TR}$ (Figur 2) von 12 kHz eine Referenzfrequenz $f_{RF}$ von 16 kHz. Das Filter 5 (Figur 1) weist daher eine Mittenfrequenz $f_M$ von 4 kHz und eine Abschwächung von mindestens 28 dB für Signale mit einer Abweichung von ±2 kHz von der Mittenfrequenz $f_M$ auf. Das Filter 2 schwächt Signale vom Eingang 8 im Bereich der Frequenz $f_{RF} + 2f_M$ = 20 kHz um mindestens 32 dB ab. Die Anforderungen an die Genauigkeit des Filters 5 wird um das Verhältnis der Frequenzen reduziert, d. h. anstelle einer Bandbreite von 1 % bei einem Bandpassfilter für 12 kHz ist für das Filter 5 eine um den Faktor 12 kHz/4 kHz erhöhte Bandbreite von 3 % zugelassen ohne Einbusse der Selektivität des Empfängers 1.

Der Vorteil dieser Ausführung zeigt sich beim Abgleich des Empfängers 1 für den Empfang von Taximpulsen mit einer anderen Trägerfrequenz $f_{TR}$ (Figur 2), beispielsweise von 16 kHz. Die Referenzfrequenz $f_{RF}$ ist von 16 kHz auf 20 kHz zu erhöhen, und der neuen Trägerfrequenz $f_{TR}$ dic Eckfrequenz $f_c$ des Tiefpassfilters 2 (Figur 1) anzupassen.

Multiplikatorschaltungen 3 in Analogtechnik sind im Lehrbuch "Advanced Electronic Circuits" von U. Tietze und Ch. Schenk, ISBN 3-540-08750-8, Springerverlag, beschrieben.

In einer anderen Ausführung des Empfängers 1 ergeben sich wesentliche Vorteile durch die Verwendung einer symmetrischen Rechteckspannung als Generatorsignal $U_G$ (Figur 2).

Das rechteckförmige Signal $U_G$ mit einer Abtastfrequenz $f_{AS}$ (Figur 3) ist im Generator 4 viel einfacher zu erzeugen als ein sinusförmiges. Abweichungen von der Symmetrie der Rechteckspannung bewirken ein niederfrequentes Störsignal, das vom Bandpassfilter 5 eliminierbar ist.

Mit einer symmetrischen Rechteckspannung reduziert sich die Wirkung der Multiplikatorschaltung 3 (Figur 1) zu einem periodischen Umkehren des Vorzeichens, d. h. die Funktion des analogen Multiplikators wird auf die eines einfachen Umschalters 21 (Figur 3) reduziert, der ein Signal am Eingang 9 periodisch auf einen positiven oder auf einen negativen Eingang eines nachgeschalteten Differenzverstärkers 22 leitet. Der Umschalter 21 und der Differenzverstärker 22 sind völlig unkritisch einstellbar. Es lassen sich daher in dieser Ausführung genau einstellbare, stabile und kostengünstige Taxempfänger 1 herstellen, die einen geringeren Stromverbrauch aufweisen als der Empfänger 1 gemäss der Figur 1.

Der Umschalter 21 verbindet einen mit einem Wechselkontakt verbundenen Eingang 9 mit einem der beiden Ausgänge dieser Schaltung synchron zu der am Takteingang 10 des Umschalters 21 anliegenden Generatorspannung $U_G$ (Figur 4). Die beiden Ausgänge des Umschalters 21 (Figur 3) sind auf einen positiven bzw. auf einen negativen Eingang des Differenzverstärkers 22 geführt. Je nach Stellung des Umschalters 21 wird das Signal am Eingang 9 mit einem positiven oder mit einem negativen Faktor multipliziert, z. B. mit einem Faktor +2 oder -2. Das Produktsignal UEB (Figur 4) am Ausgang 11 (Figur 3) wird wie in der Figur 1 mittels Bandpassfilter 5, Hüllkurven-Detektor 6 und Schwellwertschalter 7 zum Taximpuls am Ausgang 13 umgewandelt.

Die rechteckförmige Generatorspannung $U_G$ - (Figur 4) setzt sich im Frequenzspektrum aus einer Grundfrequenz $f_{AF}$ und mit abnehmender Amplitude aus den ungeradzahligen Vielfachen von $f_{AF}$ zusammen. Ein im Tiefpassfilter 2 (Figur 3) gefiltertes und an den Eingang 9 abgegebenes Signal $U_T$ (Figur 4) wird mit der Generatorspannung $U_G$ multipliziert. Das Spektrum des Signales $U_{EB}$ zeigt daher neben den Frequenzbändern 17, 18, 19 und 20 vielfache Wiederholungen 23, 24 usw. der um die ungeradzahligen Vielfachen der Frequenz $f_{AF}$ zentrierten Bänder mit abnehmenden Amplituden. Der Bereich 17 wird als das Ausgangssignal $U_{AB}$ aus dem Signal $U_{EB}$ mittels des Bandpassfilters 5 (Figur 3) herausgefiltert.

Eine Ausführung des Generators 4 weist einen Oszillator von z. B. 1 MMz auf. Vorteilhaft weist der Oszillator ein rechteckförmiges Ausgangssignal mit einer mittels eines Schwingquarzes stabilisierten Frequenz auf. Die Abtastfrequenz fAF der Generatorspannung UG am Eingang 10 ist mittels eines im Generator 4 vorgesehenen, programmierbaren Frequenzteilers einfach durch Einstellen des Divisorbytes an den dafür vorgesehenen Eingängen des Frequenzteilers anpassbar. Ein solcher programmierbarer Frequenzteiler ist unter der Nummer MC 14526 in "The European CMOS Selection" 1979 auf der Seite 9 - 473 von der Firma MOTOROLA INC., Semiconductor Products Group, 1211 Genf 20, beschrieben.

Eine weitere Einsparung ergibt sich mit dieser Ausführung, falls der Empfänger 1 in einer modernen Telephonstation eingebaut wird. Eine frequenzstabilisierte Rechteckspannung ist dann ohnehin für die programmierbare Steuerung der Telephonstation vorgesehen, d. h. die Steuerung übernimmt ganz oder teilweise die Funktion des Generators 4.

In einer Ausführung des Empfängers 1, die für Taximpulse mit einer Trägerfrequenz $f_{TR}$ von 12 kHz vorbestimmt ist, beträgt die Abtastfrequenz $f_{AF}$ = 15'625 Hz und die Mittenfrequenz $f_M$ = 3,6 kHz.

In einer Ausführung des Empfängers 1, die für Taximpulse mit einer Trägerfrequenz $f_{TR}$ von 16 kHz vorbestimmt ist, beträgt die Abtastfrequenz $f_{AF}$ = 20'833$\frac{1}{3}$ Hz und die Mittenfrequenz $f_M$ = 4,8 kHz.

In einer Ausführung des Empfängers 1, die für Taximpulse mit einer Trägerfrequenz $f_{TR}$ von 3,4 kHz vorbestim&t ist, beträgt die Abtastfrequenz $f_{AF}$ = 5'208$\frac{1}{3}$ Hz und die Mittenfrequenz $f_M$ = 2,2 kHz.

In diesen Beispielen sind die Abtastfrequenzen $f_{AS}$ so gewählt, dass sie mittels einer am programmierbaren Frequenzteiler entsprechend eingestellten Untersetzung aus der Generatorfrequenz 1 MHz gewonnen werden.

In Figur 1 ist eine Ausführung der Filter 2 und 5 als passive Filter mit Induktivitäten und Kapazitäten grundsätzlich möglich, ist jedoch eine teure Lösung, da für jede Frequenz abgestimmte Bauteile benötigt werden und die einem grossen Platzbedarf aufweisen. Vorteilhaft werden daher die beiden Filter 2 und 5 als z. B. aktive RC-Filter 4. Ordnung ausgeführt. Derartige Filter sind z. B. bei U. Tietze und Ch. Schenk beschrieben. Für den ganzen Frequenzbereich von 3,4 kHz bis 16 kHz beschränkt sich ein Abstimmen der beiden Filterkennlinien auf ein Abgleichen der Widerstandswerte, d. h. die Empfänger 1 sind alle gleichbestückt herstellbar und sind erst beim Endabgleich auf die gewünschte Trägerfrequenz $f_{TR}$einstellbar. Sehr ökonomisch ist ein Abgleich von aufgedruckten Dickfilmwiderständen bei einer Ausführung des Empfängers 1 in Hybridtechnik durchzuführen. Dies wirkt sich vorteilhaft auf Lagerhaltung und Produktion der Empfänger 1 aus.

## Ansprüche

1. Empfänger für die Rückgewinnung von Taximpulsen aus einem leitungsgebundenen Signal mit einer hohen Trägerfrequenz zur Verwendung in Taxzählern und in Telephonstationen, dadurch gekennzeichnet, dass der Empfänger (1) ein Tiefpassfilter (2) zum Abschneiden von Hochfrequenzanteilen (16) oberhalb einer Trägerfrequenz ($f_{TR}$) aus einem Eingangssignal $U_E$, einen Generator (4) zum Erzeugen eines Generatorsignals ($U_G$), eine Multiplikatorschaltung (3) zum Schieben eines Trägerfrequenzbandes (15) auf einen um eine Differenzfrequenz ($f_{RF}$-$f_{TR}$) zentrierten Bereich (17) und ein nach einem Ausgang (11) der Multiplikatorschaltung (3) nachgeschaltetes, auf die Differenzfrequenz ($f_{RF}$-$f_{TR}$) abgestimmtes Bandpassfilter (5) enthält.

2. Empfänger nach dem vorhergehenden Anspruch, dadurch gekennzeichnet, dass das Bandpassfilter (5) ein aktives RC-Filter ist.

3. Empfänger nach Anspruch 1, dadurch gekennzeichnet, dass das Tiefpassfilter (2) ein aktives RC-Filter ist.

4. Empfänger nach einem der Ansprüche 2 und 3, dadurch gekennzeichnet, dass das Tiefpassfilter (2) und das Bandpassfilter (5) aktive RC-Filter vierter Ordnung sind.

5. Empfänger nach einem der vorangehenden Ansprüche, dadurch gekennzeichnet, dass das Generatorsignal ($U_G$) eine reine Sinusfunktion mit einer Referenzfrequenz ($f_{RF}$) ist.

6. Empfänger nach einem der Ansprüche 1, 2, 3 und 4, dadurch gekennzeichnet, dass das Generatorsignal ($U_G$) eine Rechteckspannung einer Abtastfrequenz ($f_{AF}$) ist.

7. Empfänger nach Anspruch 6, dadurch gekennzeichnet, dass die Multiplikatorschaltung (3) aus einem Umschalter (21) und einem Differenzverstärker (22) besteht.

8. Empfänger nach Anspruch 6 oder 7, dadurch gekennzeichnet, dass der Generator (4) einen Oszillator und einen programmierbaren Frequenzteiler zur Reduzierung der Oszillatorfrequenz auf die Abtastfrequenz ($f_{AF}$) enthält.

9. Empfänger nach einem der Ansprüche 6 bis 8, dadurch gekennzeichnet, dass der Empfänger (1) für einen Bereich der Trägerfrequenzen ($f_{TR}$) von 3,0 kHz bis 16 kHz gleich gebaut ist und bei einem Endabgleich nur durch Einstellen der Widerstände in den RC-Filterkreisen und durch Einstellen des programmierbaren Frequenzteilers im Generator (4) auf eine vorbestimmte Trägerfrequenz (f S1TR) abgleichbar ist.

# Fig.1

# Fig.2

$U_E$

14  15  16

0

f

$U_G$

f

$U_{EB}$

17  19  20  18

f

$U_{AB}$

17

$f_{RF}-f_{TR}$   $f_{TR}$   $f_c$   $f_{RF}$   $f_{RF}+f_{TR}$

f

0 279 025

Fig.3

Fig.4

Europäisches
Patentamt

**EUROPÄISCHER RECHERCHENBERICHT**

Nummer der Anmeldung

EP 87 11 4819

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 551 604 (THOMSON-CSF)<br>* Seite 2, Zeile 28 - Seite 9, Zeile 21; Figuren *<br>--- | 1 | H 04 M 15/28<br>H 04 M 15/36 |
| A | SIEMENS-ZEITSCHRIFT, Band 45, Nr. 7, Juli 1971, Seiten 455-459, Erlangen, DE; G. REITER et al.: "TF-Einrichtung Z1T für zwei voneinander unabhängige Fernsprechanschlüsse über nur eine Leitung"<br>* Seite 456, Spalte 1, Zeile 24 - Spalte 2, Zeile 4; Figuren 2,3 *<br>--- | 1 | |
| A | TECHNISCHE MITTEILUNGEN AEG-TELEFUNKEN, Band 70, Nr. 4/6, 1980, Seiten 203-205, Berlin, DE; J. BEER: "Teilnehmeranschluss-Trägerfrequenzsystem ALF/1"<br>* Seite 203, Spalte 1, Zeile 26 - Seite 204, Spalte 1, Zeile 29; Figur 3 *<br>----- | 1 | |

**RECHERCHIERTE SACHGEBIETE (Int. Cl.4)**

H 04 M

Der vorliegende Recherchenbericht wurde für alle Patentansprüche erstellt

| Recherchenort | Abschlußdatum der Recherche | Prüfer |
|---|---|---|
| DEN HAAG | 25-04-1988 | KEPPENS P.M.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.........................................................................
& : Mitglied der gleichen Patentfamilie, übereinstimmendes Dokument

EPO FORM 1503 03.82 (P0403)